# EUROPEAN PATENT APPLICATION

(11) **EP 1 319 333 A2**
(43) Date of publication of application: **18.06.2003**
(21) Application number: 02080642.8
(22) Date of filing: 13.12.2002
(51) Int. Cl.: A01K 45/00

(54) **Method for loading poultry in crates from a poultry house onto a transport vehicle for transport to another location, as well as a guide system to be used therewith**

(30) Priority: 13.12.2001 NL 1019555
(71) Applicant: Janssen, Marcel Lodewijk Petrus Maria, 5764 RL De Rips (NL)
(72) Inventor: Janssen, Marcel Lodewijk Petrus Maria, 5764 RL De Rips (NL)
(74) Representative: Valkonet, Rutger

(57) **Abstract**

The invention relates to a method for loading poultry in crates from a poultry house (1) onto a transport vehicle for transport to another location, such as a slaughterhouse or another poultry house, comprising the steps of
- manually catching the animals,
- transporting the manually caught animals to a crate (20),
- placing the animals into the crate (20),
- moving the crate with the animals present therein to the transport vehicle,
- using a guide system (4) with movable carriers (17) for crates in the poultry house, which guide system extends from a location near the poultry towards the transport vehicle,
- moving the crate with the poultry for slaughter present therein to the transport vehicle by placing the crate on the carriers and moving the carriers with the crates over the guide system, as well as to a guide system to be used therewith.

## Description

The invention relates to a method for loading poultry in crates from a poultry house onto a transport vehicle for transport to another location, such as a slaughterhouse or another poultry house, comprising the steps of
- manually catching the animals,
- transporting the manually caught animals to a crate,
- placing the animals into the crate,
- moving the crate with the animals present therein to the transport vehicle.

Such a method is generally known. It is usual for a poultry house, for example a free-range poultry house for chickens, to be emptied regularly, for example every 12 to 14 months, after which a new generation of animals takes the place of the ones that have been removed. When such a poultry house is emptied, all the poultry is caught and transported to a slaughterhouse in crates on a lorry. According to the prior art, a team of catchers enters the poultry house in question in the evening or at night to catch the poultry and arrange for the poultry to be placed in crates on the lorry outside the poultry house. In practice, the members of the team usually form a human chain between the location in the poultry house at which the animals are caught and the lorry, beside which empty crates are disposed. Logically, the catching of the poultry takes place at the head of this human chain, whilst the animals are put into the crates at the end of said human chain. The animals are frequently passed from hand to hand within said human chain. It should be realised that usually four to five animals are held by their legs with each hand. A typical productivity level that is achieved with such a method is 200 animals per man per hour. Such a procedure has a number of drawbacks. In the first place, these drawbacks are connected with the animals themselves, for which this procedure is a very stressful and consequently animal-unfriendly experience. It is a known fact that stress has an adverse effect on the meat quality of poultry, which is unfavourable for the slaughterhouse and eventually for the consumer, therefore. In addition, damage to the animals in the form of bone fractures frequently occurs, which is disadvantageous from the viewpoint of animal well-being, of course, but which in addition interferes with the slaughtering process, which is currently automated to a large degree. In addition to that, also human aspects play a role with regard to the drawbacks of the method according to the prior art. Many people experience the operations involved in the catching of poultry for slaughter and the loading into crates and onto a lorry of the animals as unpleasant. This is caused, among other things, by the fact that the work is physically demanding and that poultry houses are generally dusty places, in which the amount of dust that is whirled up is only increased by the continuous walking of the people in the human change. In addition to that, there is a real danger of people stumbling, the more so because the operations are generally carried out in strongly dimmed light.

The object of the invention is to provide a method according to the introduction which provides a solution or at least an improvement with regard to the aforesaid drawbacks, and which furthermore enables an enhanced productivity. In order to accomplish that object, the method according to the invention is characterized by the steps of
- using a guide system with movable carriers for crates in the poultry house, which guide system extends from a location near the poultry towards the transport vehicle,
- moving the crate with the poultry for slaughter present therein to the transport vehicle by placing the crate on the carriers and moving the carriers with the crates over the guide system.

A time-consuming and unpleasant (also for the poultry for slaughter) aspect of the prior art method, viz. the walking of relatively long distances and the hand-to-hand transfer of caught animals, is eliminated by using the guide system and the carriers. After all, by disposing the crates to be filled very close to the catching location it is ensured that the movement of the poultry between the catching location and the crate takes place in the most pleasant possible manner both for humans and for the animals. Once the poultry for slaughter has been placed in the crate, the worst is over for the animals in a certain sense. Moving the crate with the poultry for slaughter present therein to the transport vehicle can take place in a simple manner by pushing or pulling the movable carrier over the guide system.

The guide system preferably extends to a location outside the poultry house, in the immediate vicinity of the transport vehicle. Thus, the advantages of the guide system and the movable carriers are also utilised outside the poultry house, for the stretch between the poultry house and the transport vehicle. At the location where the transport vehicle is present, the crates can be removed from the carriers and be placed onto the transport vehicle, with a minimum of physical effort on the part of the persons involved being required.

An optimum utilisation is obtained if a number of carriers with crates present thereon are moved to the transport vehicle simultaneously in a train-like manner. In that case a single person can move a number of crates to the transport vehicle at the same time, which helps to achieve an enhanced efficiency and productivity.

The same obtains for the situation in which a number of crates are placed on a carrier. This can be achieved, for example, by stacking the crates on top of each other and/or by placing the crates beside each other on the carrier. The dimensions and the bearing capacity of the carrier must be geared to this, of course.

In order to reduce the physical strain for the persons involved, the crate is preferably present on the carrier already when the animals are being loaded into the crates. The consequence of this may be that the crate that is present on the carrier is not in the immediate vicinity of the poultry, it is true, as might be the case in the situation in which loose crates are used, but it is no longer necessary to place a crate filled with poultry on the carrier.

A very advantageous embodiment of the method according to the invention is obtained if the guide system is installed temporarily in the poultry house. This implies that the guide system is specifically installed for the purpose of emptying the poultry house in question, i.e. that it is placed in the poultry house shortly before the catching activities are started and is removed again shortly thereafter. To this end, the guide system can suitably be arranged on the floor of the poultry house without being fixed thereto. An important advantage of this is that it is possible to use the guide system in various poultry houses, so that the purchase of such a guide system will be profitable sooner. It should be realised in this connection that the method according to the invention will usually be carried out by specialised companies rather than by the poultry farmer in question himself.

The invention also relates to a guide system to be used with a method according to the invention as described above. In particular in connection with the temporary installation of the guide system in the poultry house, the guide system preferably comprises rail segments to be coupled together by using coupling means, which rail segments are each built up of two spaced-apart longitudinal guides which are interconnected by transverse members.

In order to make it possible to use the guide system in combination with carriers fitted with more or less standard wheels, the longitudinal guides are preferably of U-shaped cross-section.

In order to facilitate the installation and removal of the guide system in and from the poultry house, at least the longitudinal guides of the guide system are preferably made of aluminium. The low specific weight of aluminium enables easy manipulation and positioning of the rail segments relative to each other for the purpose of creating a specific transport route for the crates.

It is very advantageous if the coupling means can be operated without tools being needed. Such coupling means facilitate and accelerate the process of installing and removing the guide system in and from the poultry house.

A very advantageous and simple embodiment is obtained if the coupling means comprise a pin extending transversely to the longitudinal guide, which pin is movable between a first position, in which the pin does not extend through an opening in a rail segment, and a second position, in which the pin does extend through the opening in the rail segment. Constructionally, this is easy to realise.

Preferably, such coupling means comprise spring means, which cause the pin to move from the first position to the second position, or from the second position to the first position. In particular in the former situation, a very reliable connection is effected.

The invention will be explained in more detail by means of a description of a preferred embodiment of the method and the guide system according to the invention. In the description, reference is made to Figures 1 - 3.

Figure 1 shows the situation in a poultry house while the preferred embodiment of the method according to the invention is being carried out, using the guide system according to the invention.

Figure 2 shows the situation outside the poultry house.

Figure 3 shows a detail of the guide system.

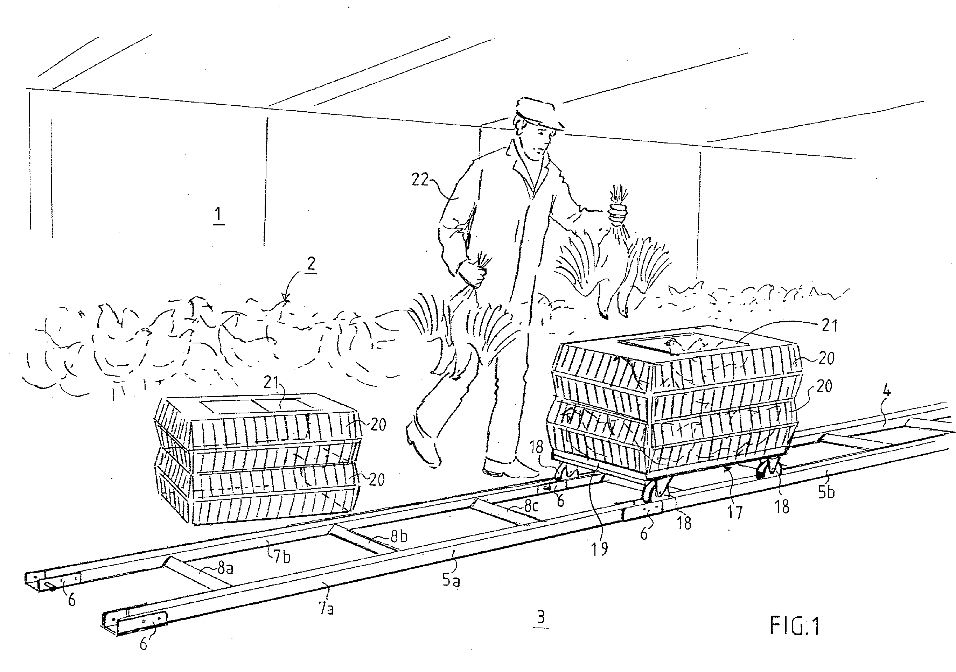

Figure 1 shows the interior of a poultry house 1 for chickens 2. A temporary rail system 4 is installed on the floor 3. Said rail system 4 is built up of a number of individual rail segments 5a, 5b, etc, which are coupled together by means of coupling elements 6. Each rail segment 5a, 5b consists of two parallel, U-shaped aluminium sections 7a, 7b extending in longitudinal direction, which are interconnected by means of transverse strips 8a, 8b, 8c at regularly spaced locations. Each section 7a, 7b has a coupling element 6 fixedly connected to one end thereof. Said coupling elements 6 are U-shaped, too, with this understanding that the dimensions are such that the coupling elements 6 are capable of enclosing the U-shaped section 7a, 7b, to which end the coupling elements 6 project slightly beyond the respective ends of the section 7a, 7b.

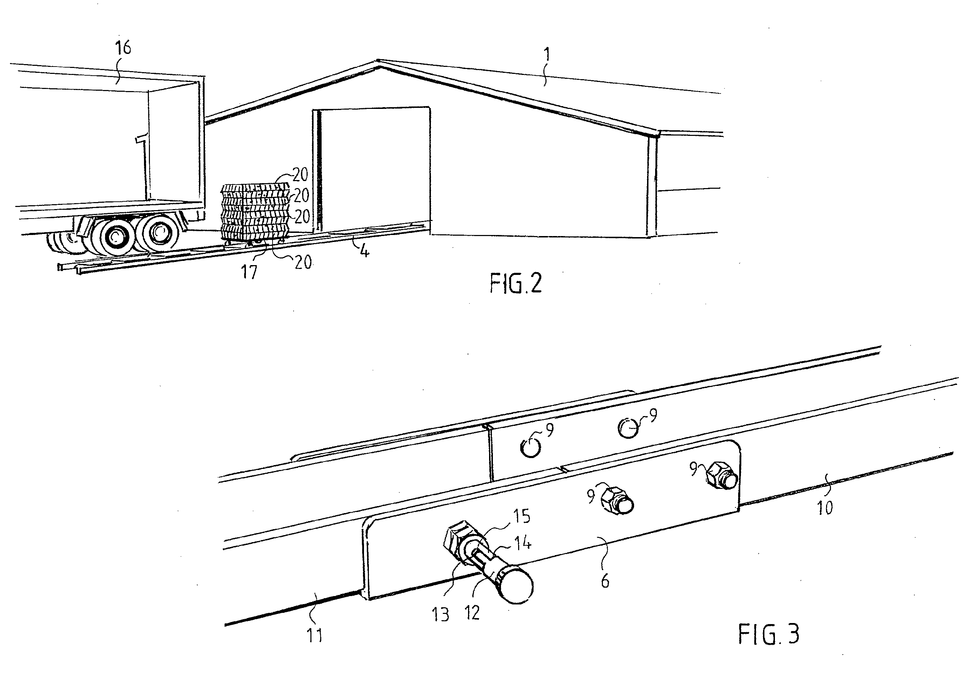

Figure 3 is a more detailed view of the vicinity of such a coupling element 6. The coupling element 6 is relatively rigidly connected to a first section 10 of a first rail segment by means of carriage bolt-nut connection. The coupling element 6 extends beyond the end of said first section 10, so that the second section 11 can be accommodated within the U-shape of the coupling element 6, in line with the first section 10. A borehole (not shown) is present in the front upright leg of the U-shape of the second section 11, through which borehole a pin forming part of the coupling element 6 extends. Said pin is present at the end of a pull element 12. Said pull element 12 can be pulled out against spring force and be turned through 90°, causing the pin to move out of the borehole and a stop edge 13 of the pull element 12 to abut under spring tension against the stop 14 that is present on the outside of a guide bush 15 for the pin. The coupling together of rail segments can thus take place in a very simple manner by placing the ends of the rail segments into contact with each other within a coupling element 6 and subsequently turning the pull element 12 through 90° from the pulled-out position, as a result of which the pin in question will move into the borehole in question under the influence of the spring tension.

Trolleys 17 can be easily moved from the poultry house 1 to a lorry 16 (Figure 2) over a track formed by coupled-together rail segments. The trolleys 17 have four wheels 18, which are accommodated within the U-shape of the sections 7a 7b. The trolleys 17 have a flat platform 9, on which crates 20 for chickens 2 can be placed and be stacked. Each crate is to that end provided with a reclosable opening 21 at the upper side.

The following procedure is followed for loading the chickens 2 in crates 20 from the poultry house onto the lorry 16. An empty trolley 17 is placed on the rail system 4 as close as possible to the location where the chickens 2 are being caught by catcher 22. Then a crate 20 is placed on the trolleys 17, in case one should not be present thereon yet, after which the catcher 22 catches a number of chickens in the immediate vicinity of the trolleys 17 and puts them in the crate 20 in question until sufficient animals are present in the crate. Then the opening 21 is closed by the catcher 22 and the next crate 20 is placed on top of the filled crate 20, after which the process is repeated. According to an alternative possibility, the crate 20 to be filled is not present on the trolley 17 yet while the crate 20 is being filled with chickens 2, but (even) closer to the chickens 2 to be caught. The advantage of this is that the distance to be covered by the catcher 22 between the catching location and the crate 20 can be minimised. On the other hand it will be necessary to lift the crate 20 once it is filled and place it on the trolley 17. Also a combination of the above methods is possible, of course.

After the crate 17 has been loaded with a sufficient number of filled crates 20, the catcher 22 (or another member of his team) pushes the trolley 17 to the lorry 16, where the crates 20 are lifted off the trolley 17 in order to be placed on the lorry 16. Then the trolley 17 is pushed back in order to be used again. According to a very advantageous possibility, the person pushing the trolley 17 towards a lorry 16 moves a number of trolleys 17 at the same time, for example by pushing against the rear trolley or pulling at the front trolley. In the latter case, the trolleys 7 will have to be coupled together, of course.

For reasons that have already been discussed above, the method according to the invention as described above offers major advantages as regards productivity, working conditions and animal well-being.

## Claims

1. A method for loading poultry in crates from a poultry house onto a transport vehicle for transport to a slaughterhouse, comprising the steps of
- manually catching the animals,
- transporting the manually caught animals to a crate,
- placing the animals into the crate,
- moving the crate with the animals present therein to the transport vehicle,
**characterized by** the steps of
- using a guide system with movable carriers for crates in the poultry house, which guide system extends from a location near the poultry towards the transport vehicle,
- moving the crate with the poultry for slaughter present therein to the transport vehicle by placing the crate on the carriers and moving the carriers with the crates over the guide system.

2. A method according to claim 1, **characterized in that** the guide system extends to a location outside the poultry house, in the immediate vicinity of the transport vehicle.

3. A method according to claim 1 or 2, **characterized in that** a number of carriers with crates present thereon are moved to the transport vehicle simultaneously in a train-like manner.

4. A method according to claim 1, 2 or 3, **characterized in that** a number of crates are placed on a carrier.

5. A method according to any one of the preceding claims, **characterized in that** the crate is present on the carrier already when the animals are being loaded into the crate.

6. A method according to any one of the preceding claims, **characterized in that** the guide system is installed temporarily in the poultry house.

7. A guide system for use with a method according to any one of the preceding claims, **characterized in that** the guide system comprises rail systems to be coupled together by using coupling means, which rail segments are each built up of two spaced-apart longitudinal guides which are interconnected by transverse members.

8. A guide system according to claim 7, **characterized in that** said longitudinal guides are of U-shaped cross-section.

9. A guide system according to claim 7 or 8, **characterized in that** at least the longitudinal guides of the guide system are made of aluminium.

10. A guide system according to any one of the claims 7 - 9, **characterized in that** said connecting means can be operated manually, without tools being needed.

11. A guide system according to claim 10, **characterized in that** said coupling means comprise a pin extending transversely to the longitudinal guide, which pin is movable between a first position, in which the pin does not extend through an opening in a rail segment, and a second position, in which the pin does extend through the opening in the rail segment.

12. A guide system according to claim 11, **characterized in that** said coupling means comprise spring means, which cause the pin to move from the first position to the second position, or from the second position to the first position.
